# EUROPEAN PATENT APPLICATION

(11) **EP 1 462 175 A2**
(43) Date of publication of application: **29.09.2004**
(21) Application number: 04251614.6
(22) Date of filing: 19.03.2004
(51) Int. Cl.: B01L 3/02

(54) **Apparatus and methods for dispensing isolated droplet**

(30) Priority: 24.03.2003 US 395458
(71) Applicant: Agilent Technologies, Inc., Palo Alto, CA 94306 (US)
(72) Inventor: Peck, Bill J., Mountain View, CA 94303 (US); Daquino, Lawrence J., Los Gatos, CA 95032 (US)
(74) Representative: Tollett, Ian

(57) **Abstract**

Apparatus and methods are disclosed for dispensing, from a droplet dispensing device, drops of fluid reagent for synthesizing a plurality of biopolymers on a substrate. The dispensing device comprises a surface comprising a plurality of nozzles. In the method a source-sink flow of gas is introduced adjacent the surface and drops of fluid are then dispensed from the droplet dispensing device to a surface of the substrate. In one embodiment the apparatus (100) may comprise a plurality of droplet dispensing devices (104, 106) and the method comprises introducing a source-sink flow of gas between each of the droplet dispensing devices adjacent each substrate surface. In one embodiment a characteristic or condition of the gas may be monitored.

## Description

This invention relates to a method for dispensing droplets of fluid and to a droplet dispensing device used in the manufacture of substrates or supports having bound to the surfaces thereof a plurality of chemical compounds, such as biopolymers. In one aspect the invention relates to the manufacture of arrays formed and arranged by depositing compounds or synthesizing large numbers of compounds on solid substrates in a predetermined arrangement. In another aspect this invention relates to the field of bioscience in which arrays of oligonucleotide probes are fabricated or deposited on a surface and are used to identify or analyze DNA sequences in cell matter.

In the field of diagnostics and therapeutics, it is often useful to attach species to a surface. One important application is in solid phase chemical synthesis wherein initial derivatization of a substrate surface enables synthesis of polymers such as oligonucleotides and peptides on the substrate itself. Substrate bound oligomer arrays, particularly oligonucleotide arrays, may be used in screening studies for determination of binding affinity. Modification of surfaces for use in chemical synthesis has been described. See, for example, U.S. Patent No. 5,266,222 (Willis) and U.S. Patent No. 5,137,765 (Farnsworth).

The arrays may be microarrays created on the surface of a substrate by *in situ* synthesis of biopolymers such as polynucleotides, polypeptides, polysaccharides, etc., and combinations thereof, or by deposition of molecules such as oligonucleotides, cDNA and so forth. In general, arrays are synthesized on a surface of a substrate or substrate by one of any number of synthetic techniques that are known in the art. In one approach, for example, the substrate may be one on which a single array of chemical compounds is synthesized. Alternatively, multiple arrays of chemical compounds may be synthesized on the substrate, which is then diced, i.e., cut, into individual assay devices, which are substrates that each comprise a single array, or in some instances multiple arrays, on a surface of the substrate.

There are several important design aspects required to fabricate an array of biopolymers such as cDNA's or DNA oligomers. First, the array sensitivity is dependent on having reproducible spots on the substrate. The location of each type of spot must be known and the spotted area should be uniformly coated with the DNA. Second, since DNA is expensive to produce, a minimum amount of the DNA solution should be loaded into any of the transfer mechanisms. Third, any cross contamination of different DNA's must be lower than the sensitivity of the final array as used in a particular assay, to prevent false positive signals. Therefore, the transfer device must be easily cleaned after each type of DNA is deposited or the device must be inexpensive enough to be a disposable. Finally, since the quantity of the assay sample is often limited, it is advantageous to make the spots small and closely spaced.

Similar technologies can be used for *in situ* synthesis of biopolymer arrays, such as DNA oligomer arrays, on a solid substrate. In this case, each oligomer is formed nucleotide by nucleotide directly in the desired location on the substrate surface. This process demands repeatable drop size and accurate placement on the substrate. It is advantageous to have an easily cleaned deposition system since some of the reagents have a limited lifetime and must be purged from the system frequently. Since reagents, such as those used in conventional phosphoramidite DNA chemistry may be water sensitive, there is an additional limitation that these chemical reagents do not come in contact with water or water vapor. Therefore, the system must isolate the reagents from any air that may contain water vapor for hours to days during array fabrication. Additionally, the materials selected to construct system must be compatible with the chemical reagents thereby eliminating a lot of organic materials such as rubber.

*In situ* syntheses of the type described above generally utilize a reaction chamber having a controlled environment in the reaction chamber. For example, many syntheses require an anhydrous environment to avoid the destructive effects of exposing chemical reagents to humidity present in the ambient atmosphere. Typically, an anhydrous chamber is created by placing the device for dispensing reagents in a reaction chamber through which dry gas is purged. The controlled environment is maintained within the reaction chamber especially during the insertion and removal of devices into and out of the reaction chamber.

In one approach to the synthesis of microarrays, an apparatus is employed that comprises a reaction chamber and a device for dispensing reagents to the surface of a substrate at discrete sites. A positioning system, which may be a robotic manipulator, moves the substrate to the chamber, in which at least a portion of the device for dispensing reagents is housed. Alternatively, the device for dispensing reagents may be moved in and out of the chamber. A controller controls the application of the reagents to the substrate according to predetermined procedures. The positioning system may comprise one or more stages for moving the substrate to various positions for the dispensing of reagents thereon. The stages may be, for example, an x,y- motor-driven stage, a theta stage, a rotational motor-driven stage, and the like.

As indicated above, one of the steps in the synthesis process usually involves depositing small volumes of liquid containing reagents for the synthesis, for example, monomeric subunits or whole polynucleotides, onto to surface of a support or substrate. In one approach, pulse-jet techniques are employed in depositing small volumes of liquid for synthesis of chemical compounds on the surface of substrates. For example, arrays may be fabricated by depositing droplets from a pulse-jet in accordance with known techniques. The pulse-jet includes piezo or thermal jets. Given the above requirements of biopolymer array fabrication, deposition using pulse-jet techniques is particularly favorable. In particular, pulse-jet deposition has advantages that include producing very small spot sizes. This allows high-density arrays to be fabricated. Furthermore, the spot size is uniform and reproducible. Since it is a non-contact technique, pulse-jet deposition does not result in scratching or damaging the surface of the support on which the arrays are synthesized. Pulse-jet techniques have very high deposition rate, which facilitates rapid manufacture of arrays.

In many applications of pulse jet deposition to the fabrication of biopolymer arrays, a deposition head with multiple channels may be employed. Each channel may be used for dispensing a different reagent. On the other hand, multiple deposition heads are used, each dispensing a single reagent. The latter approach is particularly attractive in the large scale fabrication of biopolymer arrays. The deposition heads typically comprise a plurality of nozzles in a dispensing surface of the deposition head. The dispensing surface will often be wetted and the wetted surface serves as a trap for satellite drops that become aerosolized during the deposition process. One danger is that the dispensing surfaces become contaminated with satellite drops of reagent other than the reagent being dispensed by the deposition head in question. The result is one or more errors in the deposition process because the wrong reagent is deposited at one of the deposition points on the surface of a substrate. The resulting biopolymer array product must be discarded.

There is a need, therefore, for an apparatus and process that would permit automated and reliable deposition of multiple different reagents on the surface of a substrate for fabricating arrays of biopolymers thereon. The apparatus should help reduce errors resulting from the deposition of an incorrect reagent drop at a specific location on the substrate surface. In this way reagent dispensing errors that might occur in the preparation of the arrays of biopolymers may be minimized or eliminated.

One embodiment of present invention is a method for dispensing, from a droplet dispensing device, drops of fluid reagent for synthesizing a plurality of biopolymers on a substrate. The dispensing device comprises a surface comprising a plurality of nozzles. In the method a source-sink flow of gas is introduced adjacent the surface and drops of fluid are then dispensed from the droplet dispensing device to a surface of the substrate. In one embodiment the apparatus may comprise a plurality of droplet dispensing devices and the method comprises introducing a source-sink flow of gas between each of the droplet dispensing devices adjacent each substrate surface. In one embodiment a characteristic or condition of the gas may be monitored.

Another embodiment of the present invention is an apparatus for dispensing drops of fluid. The apparatus comprises means for dispensing drops of fluid and means for introducing a source-sink flow of gas adjacent the means for dispensing drops of fluid.

Another embodiment of the present invention is an apparatus for dispensing drops of fluid. The apparatus comprises a droplet dispensing device comprising a surface comprising a plurality of nozzles and a manifold comprising at least one gas inlet flanked by gas outlets wherein the manifold is disposed adjacent the droplet dispensing device. In one embodiment the manifold comprises a row of gas inlets with a row of gas outlets disposed on either side of the row of gas inlets. The gas inlet is in fluid communication with a source of pressurized gas and the gas outlets are in fluid communication with a vacuum source.

Another embodiment of the present invention is an apparatus for synthesizing a plurality of biopolymer features on the surface of a substrate. The apparatus comprises a reaction chamber and an apparatus as described above and the droplet dispensing device is a device for dispensing reagents for synthesizing biopolymers to a surface of a substrate.

Another embodiment of the present invention is a method for synthesizing an array of biopolymers on a surface of a substrate. In the method multiple rounds of subunit additions are carried out wherein one or more polymer subunits are added at each of multiple feature locations on the surface to form one or more arrays on the surface. Each round of subunit additions comprises bringing the substrate and an apparatus as described above into a dispensing position relative to the activated discrete sites on the surface. The reagents are polymer subunits for the synthesis of the biopolymers. The gas inlet of the present apparatus is in fluid communication with a source of pressurized gas and the gas outlets are in fluid communication with a vacuum source. The source of pressurized gas and the vacuum source are activated. Polymer subunits are dispensed to the discrete sites. The substrate and/or the dispensing system are removed from the relative dispensing position, and the above steps are repeated to form the biopolymer array on the surface of the substrate.

Another embodiment of the present invention is a method for isolating dispensed fluid from a droplet dispensing device. The method comprises introducing, at least during dispensing of the fluid, a source-sink flow of gas adjacent the dispensed fluid.

A number of preferred embodiments of the present invention will now be described with reference to the accompanying drawings, in which:-
Fig. 1 is a perspective view, taken from a side, of an apparatus in accordance with the present invention.
Fig. 2 is a perspective view, taken from a side, of a source-sink manifold of the apparatus of Fig. 1.
Fig. 3 is a perspective view, taken from below, of the apparatus of Fig. 1.
Fig. 4 is a schematic depiction of a portion of the apparatus of Fig. 1 disposed over a substrate.
Fig. 5 is a schematic depiction of an apparatus for synthesizing a plurality of chemical compounds on the surface of a support or substrate, which includes the apparatus of Fig. 1.
Fig. 6 is a perspective view of a substrate bearing multiple arrays.
Fig. 7 is an enlarged view of a portion of Fig. 6 showing some of the identifiable individual regions (or "features") of a single array of Fig. 6.
Fig. 8 is an enlarged cross-section of a portion of Fig. 7.

The present invention provides an automated apparatus comprising one or more droplet dispensing devices for separately depositing multiple different reagents on the surface of a substrate. The droplet dispensing devices comprise a surface with a plurality of nozzles otherwise referred to herein as a dispensing surface. In the present apparatus the droplet dispensing device(s) are isolated by a source-sink flow of gas adjacent the surface with the plurality of nozzles.

The apparatus may be placed in a reaction chamber (sometimes referred to as a deposition chamber), which usually comprises an atmosphere of dry inert gas. The reaction chamber provides for an enclosed environment in which droplet dispensing devices are used. An example of a reaction chamber, for purposes of illustration and not limitation, is disclosed in U.S. Patent Application Serial No. 10/035,787 filed December 24, 2001, entitled "Small Volume Chambers."

The source-sink flow of gas generally involves centralized introduction and lateral removal of a gas from an area adjacent the dispensing surface, usually on both sides of the dispensing surface. A source-sink flow is established by the simultaneous introduction and removal of the gas. It is important that gas is introduced and removed so as not to interfere with the dispensing of droplets of reagents to the surface of a substrate. In general, gas is introduced under pressure and removed under reduced pressure or vacuum. The pressure of the gas and the magnitude of the vacuum are sufficient to create and maintain the source-sink flow. Usually, the gas pressure is about 0.5 to about 10 psi, more usually, about 1 to about 5 psi. The reduced pressure is usually about 0.5 to about 10 psi vacuum, more usually about 1 to about 5 psi vacuum.

The gas should be inert under the conditions of use in the present invention. Accordingly, the gas should not cause any deleterious effects on the reagents that are deposited or on the chemical compounds produced or deposited on the surface of the substrate or on the surface of the substrate itself. The gas should not be ozone, sulfur dioxide, nitrogen oxides, oxygen, dihydrogen sulfide, from reactive ions, radicals, peroxides or from organic or mineral materials that may be deposited or adsorbed on to the surface, e.g., oils, tar and so forth. Inert gases that may be used include noble gases, nitrogen, and the like, and mixtures thereof. Noble gases include helium, argon, krypton, xenon, neon, and the like. The noble gases may be used individually or may be mixed with each other or with other inert gases such as, for example, nitrogen, and the like.

As mentioned above, the source-sink flow of gas is disposed adjacent the dispensing surface of the droplet dispensing device. The placement of the source-sink flow with respect to the dispensing surface is determined primarily on the shape of the dispensing surface, the distance between multiple dispensing surfaces, the distance between the dispensing surface and the surface of the substrate, substrate speed, flow external to the printhead assembly for purging the entire printing chamber and, in some instances, the shape of the dispensing surface and/or of the droplet dispensing device. The dispensing surface may be square, rectangular, circular, oval, and the like. The primary consideration is that the source-sink flow of gas be disposed with respect to a dispensing surface in such a manner as to isolate drops of fluid reagent dispensed by one droplet dispensing device from drops of fluid reagent dispensed by another droplet dispensing device.

In a sense the source-sink flow of gas results in a separate, isolated reaction chamber adjacent each of the dispensing surfaces. The top and bottom walls of the separate, isolated reaction chamber are the dispensing surface and the substrate surface, respectively, and the side walls are the source-sink flow of gas. The size of this chamber is determined by the size of the dispensing surface, the distance of the source-sink flow from the sides of the dispensing surface, and the strength of the source-sink flow and so forth. Usually, the size of the separate, isolated reaction chamber is about 5 mm by about 25 mm to about 50 mm by about 150 mm.

In one embodiment the dispensing surface of the droplet dispensing device comprises a plurality of nozzles aligned in at least one row. The nozzles may be aligned in at least two rows, at least three rows, at least four rows, and so forth. Usually, the maximum number of rows is about 14. Preferably, the number of rows of nozzles is about 4 to about 8. The source-sink flow of gas is introduced adjacent both sides of the droplet dispensing device parallel to the row or rows of nozzles. The present invention eliminates the aforementioned errors due to wetted dispensing surfaces and satellite drops.

The dispensing surface of the droplet dispensing device deposits drops of fluid reagents to sites on the surface of a substrate. For the most part, drops of fluid reagent are dispensed in a direction that is substantially perpendicular to the substrate surface. The source-sink flow of gas is introduced in a direction that is also substantially perpendicular to the substrate surface. By "substantially perpendicular" is meant that the angle formed by the direction of the introduction or the direction of removal is within about 0 to about 30 degrees, preferably 0 to about 10 degrees, more preferably, about 0 degrees, from the perpendicular.

In one embodiment the source-sink flow of gas is achieved by using a manifold having a first chamber (gas introduction chamber) with a plurality of gas inlets for distributing gas under pressure and a second chamber or chambers (gas removal chamber(s)) with a plurality of gas outlets for removing the distributed gas. Gas is generally introduced into the first chamber under pressure from a source external to the manifold. The gas inlets may take the form of openings, channels, passageways, tubing and the like that extend from the interior of the first chamber to the exterior surface of the manifold comprising the gas outlets. The gas inlets may be narrow bores, cylindrical bores, rectangular bores or approximately rectangular bores, or have a more complex geometry to guide gas flow, and so forth. The dimensions of the gas inlets are dependent on the pressure of the gas, the number of gas inlets, flow rate and so forth. Usually, the dimensions of the gas inlets are about 0.25 to about 3 mm, more usually about 0.5 to about 1.5 mm, in width. The length of the gas inlet hole should preferably be greater than about 7 times the diameter to achieve a flow that is parallel to the bore diameter. This gives predictability to the flow and assists the designer. The number of such gas inlets is dependent on the dimensions of the manifold surface comprising the gas inlets, the number of rows of nozzles in the deposition head, spacing between and the like, and is usually about 5 to about 100.

The first chamber is connected by one or more suitable valves to a source of pressurized gas. The valves are computer controlled and are opened to the source of gas to establish and maintain the source-sink flow of gas. Examples of such valves include pressure regulator valves, pneumatic directional valves, solenoid operated poppet or diaphragm valves, and the like. The gas may be contained in a suitable tank that is in fluid communication with the first chamber.

In one approach, gas is introduced from approximately the center of the surface of the manifold comprising the gas outlets and the gas inlets. In a particular embodiment, the gas inlets are arranged in one or more rows, usually one row, disposed at or near the center of the manifold surface. The row of gas inlets usually is disposed along an axis of the manifold surface that is substantially parallel with the row(s) of nozzles of the droplet dispensing device. As mentioned above, the gas inlets are located along, or approximate, a centerline, centralized circular line, or the like depending on the geometry of the manifold surface. The phrase "approximately at the center" means that the gas inlets are within about 3 mm of the center, usually, within about 1 mm of the center of the manifold surface comprising the gas inlets.

The gas introduced by means of the gas inlets is removed by applying a vacuum through a plurality of gas outlets. The gas outlets may take the form of openings, channels, passageways, tubing and the like that extend from the interior of the second chamber of the manifold to the exterior surface of the manifold comprising the gas outlets. The gas outlets may be narrow bores, cylindrical bores, rectangular bores or approximately rectangular bores, or have a more complex geometry to guide gas removal, and so forth. The dimensions of the gas outlets are dependent on the pressure of the gas, the number of gas outlets, flow rate and so forth. Usually, the dimensions of the gas outlets are about 0.25 to about 3 mm, more usually about 0.5 to about 1.5 mm, in width. The number of such gas outlets is dependent on the dimensions of the manifold surface comprising the gas outlets, the number of rows of nozzles in the deposition head, the number of gas inlets the spacing between heads and the like, and is usually about 20 to about 200 mm.

The second chamber is connected by one or more suitable valves to a vacuum source or a source of reduced pressure. The valves are computer controlled and are opened to the vacuum source to establish and maintain the source-sink flow of gas. Examples of such valves include standard 5 12 or 24 V solenoid valves from the Lee Company, and the like. The vacuum source may be, for example, a house vacuum source or a local vacuum pump such as a venturi and the like. The magnitude of the vacuum should be sufficient to establish and maintain the source-sink flow of gas. Usually, the vacuum is about 0.5 to about 20 inches Hg. The magnitude or intensity of the gas removal vacuum in the chamber may be varied by adjusting the level of the vacuum source. In one approach suitable valves may be employed for applying the vacuum and for venting the gas removal chamber of the manifold. The intensity of the gas removal vacuum in the second chamber may be adjusted upwardly by partially or fully closing a valve to a vent and partially or fully opening a valve to a vacuum source. Alternatively, the intensity of the gas removal vacuum may be reduced by partially or fully opening a vent valve and partially or fully closing a valve to a vacuum source. Thus, the intensity of the chamber vacuum is adjusted during the present methods to maintain the source-sink flow of gas.

The placement of the gas outlets and the gas inlets in the manifold surface is determined by the spacings necessary to achieve the source-sink flow of gas, the spacing between heads and so forth. In a particular embodiment of the present invention, the gas inlets are disposed in the center of the manifold surface comprising the gas inlets and the gas outlets are disposed on both sides of the gas inlets. In one approach the gas outlets may be located at or near the periphery of the manifold surface. In this approach the gas outlets are arranged in rows along the periphery of the manifold surface. Usually, the gas outlets are within about 0.5 to about 3 mm of the edge of the manifold surface. The rows of gas outlets are about 0.75 to about 5 mm, usually, about 1.5 to about 3.5 mm, from the row of gas inlets.

Preferably, the apparatus is adapted so that introduction and removal of gas is carried out simultaneously. Usually, chamber vacuum is applied and gas is subsequently introduced so that removal of the gas occurs substantially simultaneously by the application of the vacuum. In one embodiment an apparatus in accordance with the present invention also comprises microprocessor, embedded real-time software and I/O interface electronics to control the sequence of operations. As a result of the aforementioned hardware and software the various components of the present devices and present apparatus are adapted to carry out the functions specified.

The droplet dispensing devices and the manifolds that comprise the present apparatus are usually mounted on a suitable support member to achieve proper orientation of the dispensing surfaces of the droplet dispensing devices and the surfaces of the manifolds comprising the gas inlets and the gas outlets. The support member is fabricated from a material that provides the necessary structural strength for supporting the droplet dispensing devices and the manifolds. Such materials include, for example, plastic, metal, composite materials, ceramic and so forth.

The droplet dispensing devices are respectively in fluid communication with sources of fluid reagents. The fluid dispensing device may be any device that dispenses fluids such as water, aqueous media, organic solvents and the like as droplets of liquid. The fluid dispensing device may comprises a pump for moving fluid and may also comprise a valve assembly with the manifold as well as a means for delivering predetermined quantities of fluid to the surface of a substrate. The fluids may be dispensed by any of the known techniques such as those mentioned above. Any standard pumping technique for pumping fluids may be employed in the dispensing device. For example, pumping may be by means of a peristaltic pump, a pressurized fluid bed, a positive displacement pump, e.g., a syringe pump, and the like.

In one specific embodiment a droplet dispensing device comprises one or more heads. Each head carries hundreds of ejectors or nozzles to deposit droplets. In the case of heads, each ejector may be in the form of an electrical resistor operating as a heating element under control of a processor (although piezoelectric elements could be used instead). Each orifice with its associated ejector and a reservoir chamber, acts as a corresponding pulse-jet with the orifice acting as a nozzle. In this manner, application of a single electric pulse to an ejector causes a droplet to be dispensed from a corresponding orifice (or larger droplets could be deposited by using multiple pulses to deposit a series of smaller droplets at a given location).

As is well known in the art, the amount of fluid that is expelled in a single activation event of a pulse jet, can be controlled by changing one or more of a number of parameters, including the orifice diameter, the orifice length (thickness of the orifice member at the orifice), the size of the deposition chamber, and the size of the heating element, among others. The amount of fluid that is expelled during a single activation event is generally in the range about 0.1 to 1000 pL, usually about 0.5 to 500 pL and more usually about 1.0 to 250 pL. A typical velocity at which the fluid is expelled from the chamber is more than about 1 m/s, usually more than about 10 m/s, and may be as great as about 20 m/s or greater. As will be appreciated, if the orifice is in motion with respect to the receiving surface at the time an ejector is activated, the actual site of deposition of the material will not be the location that is at the moment of activation in a line-of-sight relation to the orifice, but will be a location that is predictable for the given distances and velocities.

The apparatus of the invention is usually mounted inside a reaction chamber. The substrate may be moved into and within the reaction chamber to a position such that the dispensing surface of the droplet dispensing device that has the nozzles is disposed over the surface of the substrate on which droplets are to be deposited. Usually, the dispensing surface is oriented in a downward direction. It is within the purview of the invention that the present apparatus be movable with respect to the substrate surface. Means for moving the apparatus include, for example, a motion stage, pneumatic cylinder, a press, motor driven screw, clamp, linear electrical actuator such as, e.g., a solenoid or linear motor with or without positional feedback and the like.

The housing of the reaction chamber is generally constructed to permit access of the substrate into the reaction chamber. In one approach, the reaction chamber has an opening that is sealable to fluid transfer after the substrate is moved therein. Such seals may comprise a flexible material that is sufficiently flexible or compressible to form a fluid tight seal that can be maintained under increased pressures encountered in the use of the device. The flexible member may be, for example, rubber, flexible plastic, flexible resins, and the like and combinations thereof. In any event the flexible material should be substantially inert with respect to the fluids introduced into the device and must not interfere with the reactions that occur within the device. The flexible member is usually a gasket and may be in any shape such as, for example, circular, oval, rectangular, and the like. Preferably, the flexible member is in the form of an O-ring.

In an alternate approach, the substrate may be transported to and from the reaction chamber by a transfer element such as a robotic arm, and so forth. In one embodiment a transfer robot is mounted on a main platform of an apparatus for carrying out the syntheses of biopolymers on the surfaces of substrates. The transfer robot may comprise a base and an arm that is movably mounted on the base. In use, the transfer robot is activated and the arm of the robot is moved so that the substrate is delivered to a predetermined location in the reaction chamber. It is also within the purview of the present invention that the transfer robot be used in conjunction with a motion stage and the like.

The dimensions of the apparatus of the invention are dependent on the dimensions of the reaction chamber, the droplet dispensing device, the manifold for the source-sink flow of gas, the cleaning station, priming station, and so forth. Typically, the dimensions of the present apparatus are about 10 to about 50 mm in height by about 10 to about 200 mm in width and length, and in one embodiment, about 83 mm by 128 mm by 120 mm.

Another embodiment of the present apparatus comprises means for monitoring at least one characteristic or condition of the source-sink gas, which, in turn, provides information as to the characteristic or condition of the atmosphere under the dispensing surface of the droplet dispensing device. Such characteristics or conditions include, for example, atmospheric conditions within the interior of the reaction chamber under the dispensing surface such as, for example, a desired atmosphere, a desired level of humidity, reactive gases, pollen, dust and the like. One characteristic of interest is the humidity level of such atmosphere. To this end a humidity sensor may be employed to measure the water levels in the atmosphere. The humidity sensor may be any suitable sensor as known in the art. It is usually the practice in the art to introduce a gas into the interior of reaction chambers to provide for a desired atmospheric condition within the interior of the chamber. In the present invention the aforementioned apparatus may be employed to assist with introduction of such gas.

The invention will be discussed next in more detail, by way of illustration and not limitation, with reference to the accompanying figures. As a general note, figures may not be to scale and some elements of the figures may be accentuated for purposes of illustration.

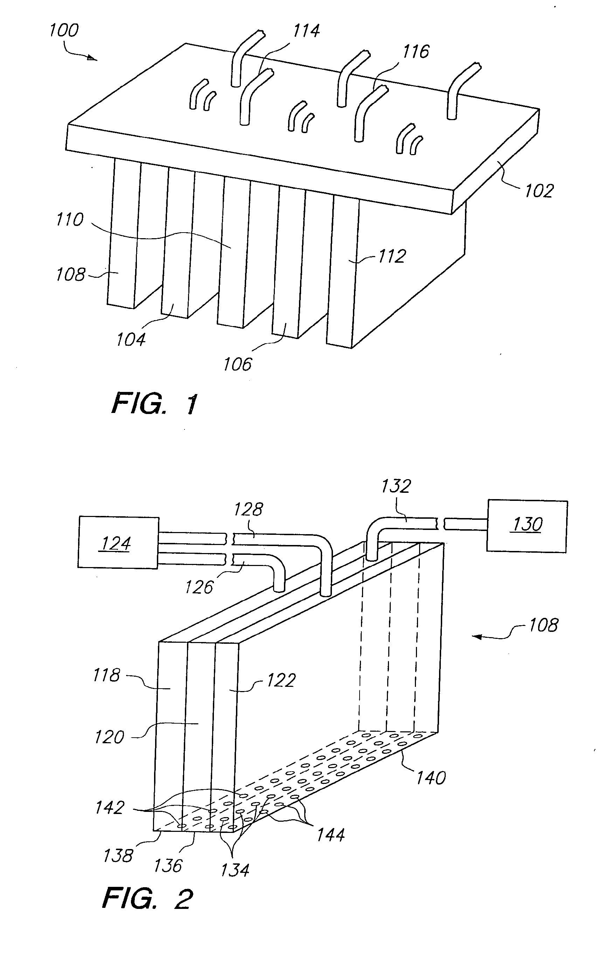

One embodiment of an apparatus in accordance with the present invention is depicted in Fig. 1-4. Apparatus 100 comprises frame member 102 to which are affixed droplet dispensing devices 104 and 106 as well as source-sink flow manifolds 108, 110 and 112. Droplet dispensing devices have fluid conduits 114 and 116, respectively, which are in fluid communication with the interior of droplet dispensing devices 104 and 106 as well as with a source of fluid reagents (not shown).

The nature of source-sink manifolds 108, 110 and 112 may be seen with reference to Fig. 2 wherein manifold 108 is depicted. Manifold 108 comprises three compartments 118, 120 and 122, respectively. Compartments 118 and 122 are in fluid communication with vacuum source 124 by means of fluid conduits 126 and 128. Compartment 120 is in fluid communication with source of pressurized gas 130 by means of fluid conduit 132. Compartment 120 comprises a plurality of openings 134 in surface 136 of compartment 120. Surfaces 138 and 140 of compartments 118 and 122, respectively, comprise openings 142 and 144.

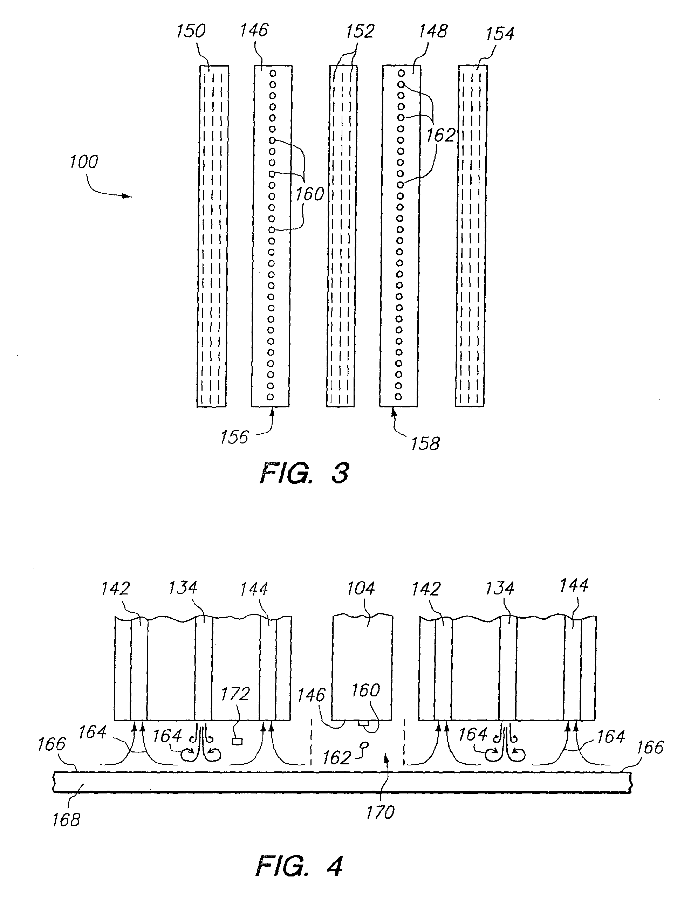

Fig. 3 is a perspective view, taken from below, of apparatus 100. Dispensing surfaces 146 and 148 of droplet dispensing devices 104 and 106, respectively, are depicted flanked by surfaces 150, 152 and 154, respectively, of manifolds 108, 110 and 112. Dispensing surfaces 146 and 148, respectively, each comprise a single row (156 and 158, respectively) of nozzles 160.

The operation of apparatus 100 may be seen with reference to Fig. 4, which depicts a portion of apparatus 100. Droplet dispensing device 104 is depicted flanked by source-sink manifolds 108 and 110. Droplet dispensing device 104 is shown dispensing drops of fluid reagent 162 from nozzles 160. Gas 164 is introduced through openings 134 and removed through openings 142 and 144. Gas 164 impinges on surface 166 of substrate 168. As a result of the source-sink flow of gas 164, the region 170 below dispensing surface 146 of droplet dispensing device 104 becomes a separate, isolated reaction chamber. Humidity sensor 172 may be included below manifold surface 150 to sense the humidity level of the gas of the source-sink flow and, thus, assess the humidity condition within region 170.

Another embodiment of the present invention is an apparatus for synthesizing a plurality of biopolymer features on the surface of a substrate or support. The apparatus comprises a reaction chamber, an apparatus in accordance with the present invention comprising source-sink gas manifolds and droplet dispensing devices for dispensing reagents for synthesizing biopolymers on a surface of the substrate, and a mechanism for moving the present apparatus and the substrate relative to one another. Preferably, the elements of the above apparatus are under computer control.

The components of the synthesis apparatus are normally mounted on a suitable frame in a manner consistent with the present invention. The frame of the apparatus is generally constructed from a suitable material that gives structural strength to the apparatus so that various moving parts may be employed in conjunction with the apparatus. Such materials include, for example, metal, plastic, glass, lightweight composites, and the like.

The synthesis apparatus may also comprise a loading station for loading reagents into the manifold of the droplet dispensing device of the present apparatus. The apparatus further may comprise a mechanism for inspecting the reagent deposited on the surface of the substrate.

The substrate may be mounted on a substrate mount, which may be any convenient structure on which the substrate may be placed and held for depositing reagents on the surface on the substrate. The substrate mount may be of any size and shape and generally has a shape similar to that of the substrate, usually, as large as or slightly larger than the substrate, i.e., about 1 to about 10 % larger than the substrate. For example, the substrate mount is rectangular for a rectangular substrate, circular for a circular substrate and so forth. The substrate mount may be constructed from any material of sufficient strength to physically receive and hold the substrate during the deposition of reagents on the substrate surface as well as to withstand the rigors of movement in one or more directions. Such materials include metal, plastic, composites, and the like. The support or substrate may be retained on the substrate mount by gravity, friction, vacuum, and the like.

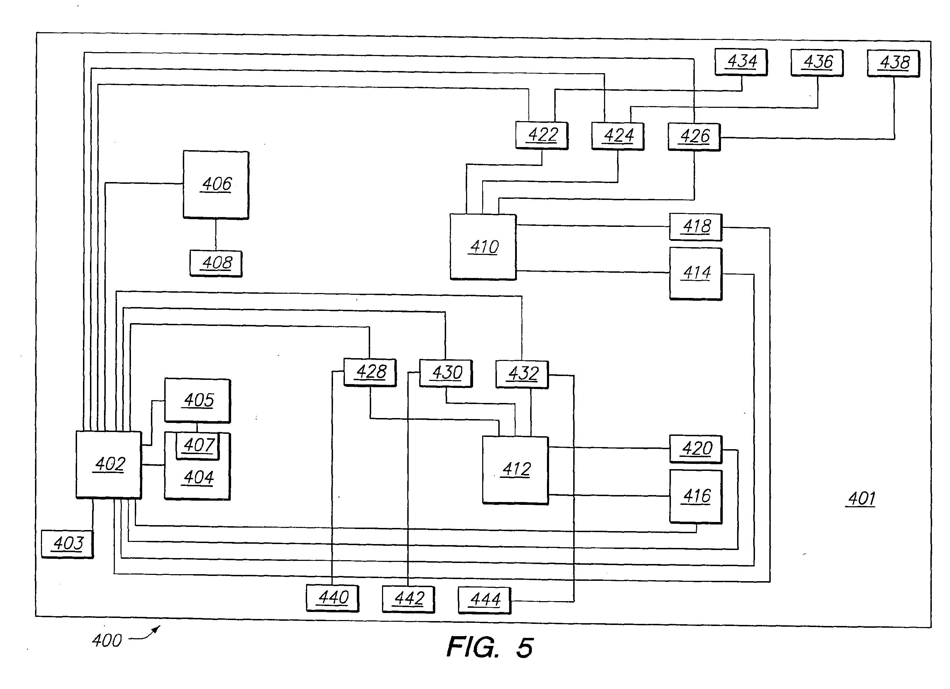

One embodiment of a synthesis apparatus in accordance with the present invention is depicted in Fig. 5 in schematic form. Apparatus 400 comprises platform 401 on which the components of the apparatus are mounted. Apparatus 400 comprises main computer 402, with which various components of the apparatus are in communication. Video display 403 is in communication with computer 402. Apparatus 400 further comprises reaction chamber 404, which is controlled by main computer 402. The nature of reaction chamber 404 depends on the nature of the deposition technique employed to add monomers to a growing polymer chain. Such deposition techniques include, by way of illustration and not limitation, pulse-jet deposition, and so forth. Usually, reaction chamber 404 comprises an apparatus 407 of the invention as shown, for example, in Fig. 1. Mechanism 405 is controlled by main computer 402 and moves apparatus 407 in reaction chamber 404 into position for depositing fluid reagents on a substrate. Transfer robot 406 is also controlled by main computer 402 and comprises a robot arm 408 that moves a substrate to and from reaction chamber 404. The substrate may be moved to one or more flow cells such as first flow cell 410 or second flow cell 412 for carrying out various procedures for synthesizing the biopolymers such as, for example, oxidation steps, blocking or deblocking steps and so forth. First flow cell 410 is in communication with program logic controller 414, which is controlled by main computer 402, and second flow cell 412 is in communication with program logic controller 416, which is also controlled by main computer 402. First flow cell 410 is in communication with flow sensor and level indicator 418, which is controlled by main computer 402, and second flow cell 412 is in communication with flow sensor and level indicator 420, which is also controlled by main computer 402. First flow cell 410 is in fluid communication with manifolds 422, 424 and 426, each of which is controlled by main computer 402 and each of which is in fluid communication with a source of fluid reagents, namely, 434, 436 and 438, respectively. Second flow cell 412 is in fluid communication with manifolds 428, 430 and 432, each of which is controlled by main computer 402 and each of which is in fluid communication with a source of fluid reagents, namely, 440, 442 and 444, respectively.

As mentioned above, the apparatus and the methods in accordance with the present invention may be automated. To this end the apparatus of the invention further comprises appropriate motors and electrical and mechanical architecture and electrical connections, wiring and devices such as timers, clocks, computers and so forth for operating the various elements of the apparatus. Such architecture is familiar to those skilled in the art and will not be discussed in more detail herein.

To assist in the automation of the present process, the functions and methods may be carried out under computer control, that is, with the aid of a computer. For example, an IBM® compatible personal computer (PC) may be utilized. The computer is driven by software specific to the methods described herein. A preferred computer hardware capable of assisting in the operation of the methods in accordance with the present invention involves a system with at least the following specifications: Pentium® processor or better with a clock speed of at least 100 MHz, at least 32 megabytes of random access memory (RAM) and at least 80 megabytes of virtual memory, running under either the Windows 95 or Windows NT 4.0 operating system (or successor thereof).

Software that may be used to carry out the methods may be, for example, Microsoft Excel or Microsoft Access, suitably extended via user-written functions and templates, and linked when necessary to stand-alone programs that perform other functions. Examples of software or computer programs used in assisting in conducting the present methods may be written, preferably, in Visual BASIC, FORTRAN and C⁺⁺. It should be understood that the above computer information and the software used herein are by way of example and not limitation. The present methods may be adapted to other computers and software. Other languages that may be used include, for example, PASCAL, PERL or assembly language.

As indicated above, the present apparatus and methods may be employed in the preparation of substrates having a plurality of chemical compounds in the form of an array on the surface of such substrates. The chemical compounds may be deposited on the surface of the substrate as fully formed moieties. On the other hand, the chemical compounds may be synthesized *in situ* in a series of steps such as, for example, the addition of building blocks, which are chemical components of the chemical compound. Examples of such building blocks are those found in the synthesis of polymers. The invention has particular application to chemical compounds that are biopolymers such as polynucleotides, for example, oligonucleotides.

Preferred materials for the substrate itself are those that provide physical support for the chemical compounds that are deposited on the surface or synthesized on the surface *in situ* from subunits. The materials should be of such a composition that they endure the conditions of a deposition process and/or an *in situ* synthesis and of any subsequent treatment or handling or processing that may be encountered in the use of the particular array.

Typically, the substrate material is transparent. By "transparent" is meant that the substrate material permits signal from features on the surface of the substrate to pass therethrough without substantial attenuation and also permits any interrogating radiation to pass therethrough without substantial attenuation. By "without substantial attenuation" may include, for example, without a loss of more than 40% or more preferably without a loss of more than 30%, 20% or 10%, of signal. The interrogating radiation and signal may for example be visible, ultraviolet or infrared light. In certain embodiments, such as for example where production of binding pair arrays for use in research and related applications is desired, the materials from which the substrate may be fabricated should ideally exhibit a low level of non-specific binding during hybridization events.

The materials may be naturally occurring or synthetic or modified naturally occurring. Suitable rigid substrates may include glass, which term is used to include silica, and include, for example, glass such as glass available as Bioglass, and suitable plastics. Should a front array location be used, additional rigid, non-transparent materials may be considered, such as silicon, mirrored surfaces, laminates, ceramics, opaque plastics, such as, for example, polymers such as, e.g., poly (vinyl chloride), polyacrylamide, polyacrylate, polyethylene, polypropylene, poly(4-methylbutene), polystyrene, polymethacrylate, poly(ethylene terephthalate), nylon, poly(vinyl butyrate), etc., either used by themselves or in conjunction with other materials. The surface of the substrate is usually the outer portion of a substrate.

The surface of the material onto which the chemical compounds are deposited or formed may be smooth or substantially planar, or have irregularities, such as depressions or elevations. The surface may be modified with one or more different layers of compounds that serve to modify the properties of the surface in a desirable manner. Such modification layers, when present, will generally range in thickness from a monomolecular thickness to about 1 mm, usually from a monomolecular thickness to about 0.1 mm and more usually from a monomolecular thickness to about 0.001 mm. Modification layers of interest include: inorganic and organic layers such as metals, metal oxides, polymers, small organic molecules and the like. Polymeric layers of interest include layers of: peptides, proteins, polynucleic acids or mimetics thereof (for example, peptide nucleic acids and the like); polysaccharides, phospholipids, polyurethanes, polyesters, polycarbonates, polyureas, polyamides, polyethylene amines, polyarylene sulfides, polysiloxanes, polyimides, polyacetates, and the like, where the polymers may be hetero- or homo-polymeric, and may or may not have separate functional moieties attached thereto (for example, conjugated). Various further modifications to the particular embodiments described above are, of course, possible. Accordingly, the present invention is not limited to the particular embodiments described in detail above.

The material used for an array support or substrate may take any of a variety of configurations ranging from simple to complex. Usually, the material is relatively planar such as, for example, a slide. In many embodiments, the material is shaped generally as a rectangular solid. As mentioned above, multiple arrays of chemical compounds may be synthesized on a sheet, which is then diced, i.e., cut by breaking along score lines, into single array substrates.

Typically, the substrate has a length in the range about 5 mm to 100 cm, usually about 10 mm to 25 cm, more usually about 10 mm to 15 cm, and a width in the range about 4 mm to 25 cm, usually about 4 mm to 10 cm and more usually about 5 mm to 5 cm. The substrate may have a thickness of less than 1 cm, or even less than 5 mm, 2 mm, 1 mm, or in some embodiments even less than 0.5 mm or 0.2 mm. The thickness of the substrate is about 0.01 mm to 5.0 mm, usually from about 0.1 mm to 2 mm and more usually from about 0.2 to 1 mm. The substrate is usually cut into individual test pieces, which may be the size of a standard size microscope slide, usually about 3 inches in length and 1 inch in width.

The invention has particular application to substrates bearing oligomers or polymers. The oligomer or polymer is a chemical entity that contains a plurality of monomers. It is generally accepted that the term "oligomers" is used to refer to a species of polymers. The terms "oligomer" and "polymer" may be used interchangeably herein. Polymers usually comprise at least two monomers. Oligomers generally comprise about 6 to about 20,000 monomers, preferably, about 10 to about 10,000, more preferably about 15 to about 4,000 monomers. Examples of polymers include polydeoxyribonucleotides, polyribonucleotides, other polynucleotides that are C-glycosides of a purine or pyrimidine base, or other modified polynucleotides, polypeptides, polysaccharides, and other chemical entities that contain repeating units of like chemical structure. Exemplary of oligomers are oligonucleotides and peptides.

A monomer is a chemical entity that can be covalently linked to one or more other such entities to form an oligomer or polymer. Examples of monomers include nucleotides, amino acids, saccharides, peptoids, and the like and subunits comprising nucleotides, amino acids, saccharides, peptoids and the like. The subunits may comprise all of the same component such as, for example, all of the same nucleotide or amino acid, or the subunit may comprise different components such as, for example, different nucleotides or different amino acids. The subunits may comprise about 2 to about 2000, or about 5 to about 200, monomer units. In general, the monomers have first and second sites (e.g., C-termini and N-termini, or 5' and 3' sites) suitable for binding of other like monomers by means of standard chemical reactions (e.g., condensation, nucleophilic displacement of a leaving group, or the like), and a diverse element that distinguishes a particular monomer from a different monomer of the same type (e.g., an amino acid side chain, a nucleotide base, etc.). The initial substrate-bound, or support-bound, monomer is generally used as a building block in a multi-step synthesis procedure to form a complete ligand, such as in the synthesis of oligonucleotides, oligopeptides, oligosaccharides, etc. and the like.

A biomonomer references a single unit, which can be linked with the same or other biomonomers to form a biopolymer (for example, a single amino acid or nucleotide with two linking groups one or both of which may have removable protecting groups). A biomonomer fluid or biopolymer fluid reference a liquid containing either a biomonomer or biopolymer, respectively (typically in solution).

A biopolymer is a polymer of one or more types of repeating units. Biopolymers are typically found in biological systems and particularly include polysaccharides (such as carbohydrates), and peptides (which term is used to include polypeptides, and proteins whether or not attached to a polysaccharide) and polynucleotides as well as their analogs such as those compounds composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions.

Polynucleotides are compounds or compositions that are polymeric nucleotides or nucleic acid polymers. The polynucleotide may be a natural compound or a synthetic compound. Polynucleotides include oligonucleotides and are comprised of natural nucleotides such as ribonucleotides and deoxyribonucleotides and their derivatives although unnatural nucleotide mimetics such as 2'-modified nucleosides, peptide nucleic acids and oligomeric nucleoside phosphonates are also used. The polynucleotide can have from about 2 to 5,000,000 or more nucleotides. Usually, the oligonucleotides are at least about 2 nucleotides, usually, about 5 to about 100 nucleotides, more usually, about 10 to about 50 nucleotides, and may be about 15 to about 30 nucleotides, in length. Polynucleotides include single or multiple stranded configurations, where one or more of the strands may or may not be completely aligned with another.

A nucleotide refers to a sub-unit of a nucleic acid and has a phosphate group, a 5 carbon sugar and a nitrogen containing base, as well as functional analogs (whether synthetic or naturally occurring) of such sub-units which in the polymer form (as a polynucleotide) can hybridize with naturally occurring polynucleotides in a sequence specific manner analogous to that of two naturally occurring polynucleotides. For example, a "polynucleotide" includes DNA (including cDNA), RNA, oligonucleotides, and PNA and other polynucleotides as described in US 5,948,902 and references cited therein (all of which are incorporated herein by reference), regardless of the source. An "oligonucleotide" generally refers to a nucleotide multimer of about 10 to 100 nucleotides in length, while a "polynucleotide" includes a nucleotide multimer having any number of nucleotides.

The nature of the support or substrate to which a plurality of chemical compounds is attached is discussed above. The substrate can be hydrophilic or capable of being rendered hydrophilic or it may be hydrophobic. The substrate is usually glass such as flat glass whose surface has been chemically activated for binding thereto or synthesis thereon, glass available as Bioglass and the like. The surface of a substrate is normally treated to create a primed or functionalized surface, that is, a surface that is able to support the attachment of a fully formed chemical compound or the synthetic steps involved in the production of the chemical compound on the surface of the substrate. Functionalization relates to modification of the surface of a substrate to provide a plurality of functional groups on the substrate surface. By the term "functionalized surface" is meant a substrate surface that has been modified so that a plurality of functional groups are present thereon usually at discrete sites on the surface. The manner of treatment is dependent on the nature of the chemical compound to be synthesized and on the nature of the substrate surface. In one approach a reactive hydrophilic site or reactive hydrophilic group is introduced onto the surface of the substrate. Such hydrophilic moieties can be used as the starting point in a synthetic organic process.

In one embodiment, the surface of the substrate, such as a glass substrate, is siliceous, i.e., the surface comprises silicon oxide groups, either present in the natural state, e.g., glass, silica, silicon with an oxide layer, etc., or introduced by techniques well known in the art. One technique for introducing siloxyl groups onto the surface involves reactive hydrophilic moieties on the surface. These moieties are typically epoxide groups, carboxyl groups, thiol groups, and/or substituted or unsubstituted amino groups as well as a functionality that may be used to introduce such a group such as, for example, an olefin that may be converted to a hydroxyl group by means well known in the art. One approach is disclosed in U.S. Patent No. 5,474,796 (Brennan), the relevant portions of which are incorporated herein by reference. A siliceous surface may be used to form silyl linkages, i.e., linkages that involve silicon atoms. Usually, the silyl linkage involves a silicon-oxygen bond, a silicon-halogen bond, a silicon-nitrogen bond, or a silicon-carbon bond.

Another method for attachment is described in U.S. Patent No. 6,219,674 (Fulcrand, *et al.).* A surface is employed that comprises a linking group consisting of a first portion comprising a hydrocarbon chain, optionally substituted, and a second portion comprising an alkylene oxide or an alkylene imine wherein the alkylene is optionally substituted. One end of the first portion is attached to the surface and one end of the second portion is attached to the other end of the first portion chain by means of an amine or an oxy functionality. The second portion terminates in an amine or a hydroxy functionality. The surface is reacted with the substance to be immobilized under conditions for attachment of the substance to the surface by means of the linking group.

Another method for attachment is described in U.S. Patent No. 6,258,454 (Lefkowitz, *et al.).* A solid substrate having hydrophilic moieties on its surface is treated with a derivatizing composition containing a mixture of silanes. A first silane provides the desired reduction in surface energy, while the second silane enables functionalization with molecular moieties of interest, such as small molecules, initial monomers to be used in the solid phase synthesis of oligomers, or intact oligomers. Molecular moieties of interest may be attached through cleavable sites.

A procedure for the derivatization of a metal oxide surface uses an aminoalkyl silane derivative, e.g., trialkoxy 3-aminopropylsilane such as aminopropyltriethoxy silane (APS), 4-aminobutyltrimethoxysilane, 4-aminobutyltriethoxysilane, 2-aminoethyltriethoxysilane, and the like. APS reacts readily with the oxide and/or siloxyl groups on metal and silicon surfaces. APS provides primary amine groups that may be used to carry out the present methods. Such a derivatization procedure is described in EP 0 173 356 B1, the relevant portions of which are incorporated herein by reference. Other methods for treating the surface of a substrate will be suggested to those skilled in the art in view of the teaching herein.

The devices and methods of the present invention are particularly useful for the preparation of substrates with array areas with array assemblies of biopolymers. Determining the nucleotide sequences and expression levels of nucleic acids (DNA and RNA) is critical to understanding the function and control of genes and their relationship, for example, to disease discovery and disease management. Analysis of genetic information plays a crucial role in biological experimentation. This has become especially true with regard to studies directed at understanding the fundamental genetic and environmental factors associated with disease and the effects of potential therapeutic agents on the cell. Such a determination permits the early detection of infectious organisms such as bacteria, viruses, etc.; genetic diseases such as sickle cell anemia; and various cancers. This paradigm shift has lead to an increasing need within the life science industries for more sensitive, more accurate and higher-throughput technologies for performing analysis on genetic material obtained from a variety of biological sources.

Unique or misexpressed nucleotide sequences in a polynucleotide can be detected by hybridization with a nucleotide multimer, or oligonucleotide, probe. Hybridization is based on complementary base pairing. When complementary single stranded nucleic acids are incubated together, the complementary base sequences pair to form double stranded hybrid molecules. These techniques rely upon the inherent ability of nucleic acids to form duplexes via hydrogen bonding according to Watson-Crick base-pairing rules. The ability of single stranded deoxyribonucleic acid (ssDNA) or ribonucleic acid (RNA) to form a hydrogen bonded structure with a complementary nucleic acid sequence has been employed as an analytical tool in molecular biology research. An oligonucleotide probe employed in the detection is selected with a nucleotide sequence complementary, usually exactly complementary, to the nucleotide sequence in the target nucleic acid. Following hybridization of the probe with the target nucleic acid, any oligonucleotide probe/nucleic acid hybrids that have formed are typically separated from unhybridized probe. The amount of oligonucleotide probe in either of the two separated media is then tested to provide a qualitative or quantitative measurement of the amount of target nucleic acid originally present.

Direct detection of labeled target nucleic acid hybridized to surface-bound polynucleotide probes is particularly advantageous if the surface contains a mosaic of different probes that are individually localized to discrete, and often known, areas of the surface. Such ordered arrays containing a large number of oligonucleotide probes have been developed as tools for high throughput analyses of genotype and gene expression. Oligonucleotides synthesized on a solid substrate recognize uniquely complementary nucleic acids by hybridization, and arrays can be designed to define specific target sequences, analyze gene expression patterns or identify specific allelic variations. The arrays may be used for conducting cell study, diagnosing disease, identifying gene expression, monitoring drug response, determination of viral load, identifying genetic polymorphisms, analyzing gene expression patterns or identifying specific allelic variations, and the like.

In one approach, cell matter is lysed, to release its DNA as fragments, which are then separated out by electrophoresis or other means, and then tagged with a fluorescent or other label. The resulting DNA mix is exposed to an array of oligonucleotide probes, whereupon selective binding to matching probe sites takes place. The array is then washed and interrogated to determine the extent of hybridization reactions. In one approach the array is imaged so as to reveal for analysis and interpretation the sites where binding has occurred. Arrays of different chemical compounds or moieties or probe species provide methods of highly parallel detection, and hence improved speed and efficiency, in assays. Assuming that the different sequence polynucleotides were correctly deposited in accordance with the predetermined configuration, then the observed binding is indicative of the presence and/or concentration of one or more polynucleotide components of the sample.

An array includes any one-, two- or three- dimensional arrangement of addressable regions bearing a particular biopolymer such as polynucleotides, associated with that region. An array is addressable in that it has multiple regions of different moieties, for example, different polynucleotide sequences, such that a region or feature or spot of the array at a particular predetermined location or address on the array can detect a particular target molecule or class of target molecules although a feature may incidentally detect non-target molecules of that feature.

An array assembly on the surface of a substrate refers to one or more arrays disposed along a surface of an individual substrate and separated by inter-array areas. Normally, the surface of the substrate opposite the surface with the arrays (opposing surface) does not carry any arrays. The arrays can be designed for testing against any type of sample, whether a trial sample, a reference sample, a combination of the foregoing, or a known mixture of components such as polynucleotides, proteins, polysaccharides and the like (in which case the arrays may be composed of features carrying unknown sequences to be evaluated). The surface of the substrate may carry at least one, two, four, or at least ten, arrays. Depending upon intended use, any or all of the arrays may be the same or different from one another and each may contain multiple spots or features of chemical compounds such as, e.g., biopolymers in the form of polynucleotides or other biopolymer. A typical array may contain more than ten, more than one hundred, more than one thousand or ten thousand features, or even more than one hundred thousand features, in an area of less than 20 cm² or even less than 10 cm². For example, features may have widths (that is, diameter, for a round spot) in the range from a 10 µm to 1.0 cm. In other embodiments each feature may have a width in the range of 1.0 µm to 1.0 mm, usually 5.0 µm to 500 µm, and more usually 10 µm to 200 µm. Non-round features may have area ranges equivalent to that of circular features with the foregoing width (diameter) ranges.

Any of a variety of geometries of arrays on a substrate may be used. As mentioned above, an individual substrate may contain a single array or multiple arrays. Features of the array may be arranged in rectilinear rows and columns. This is particularly attractive for single arrays on a substrate. When multiple arrays are present, such arrays can be arranged, for example, in a sequence of curvilinear rows across the substrate surface (for instance, a sequence of concentric circles or semi-circles of spots), and the like. Similarly, the pattern of features may be varied from the rectilinear rows and columns of spots to include, for example, a sequence of curvilinear rows across the substrate surface (for example, a sequence of concentric circles or semi-circles of spots), and the like. The configuration of the arrays and their features may be selected according to manufacturing, handling, and use considerations.

Each feature, or element, within the molecular array is defined to be a small, regularly shaped region of the surface of the substrate. The features are arranged in a predetermined manner. Each feature of an array usually carries a predetermined chemical compound or mixtures thereof. Each feature within the molecular array may contain a different molecular species, and the molecular species within a given feature may differ from the molecular species within the remaining features of the molecular array. Some or all of the features may be of different compositions. Each array may contain multiple spots or features and each array may be separated by spaces or areas. It will also be appreciated that there need not be any space separating arrays from one another. Interarray areas and interfeature areas are usually present but are not essential. As with the border areas discussed above, these interarray and interfeature areas do not carry any chemical compound such as polynucleotide (or other biopolymer of a type of which the features are composed). Interarray areas and interfeature areas typically will be present where arrays are formed by the conventional *in situ* process or by deposition of previously obtained moieties, as described above, by depositing for each feature at least one droplet of reagent such as from a pulse jet but may not be present when, for example, photolithographic array fabrication processes are used. It will be appreciated though, that the interarray areas and interfeature areas, when present, could be of various sizes and configurations.

The devices and methods of the present invention are particularly useful in the preparation of individual substrates with oligonucleotide arrays for determinations of polynucleotides. In one approach, multiple identical arrays across a complete front surface of a single substrate or support are used.

As mentioned above, biopolymer arrays can be fabricated by depositing previously obtained biopolymers (such as from synthesis or natural sources) onto a substrate, or by *in situ* synthesis methods. *The in situ* synthesis methods include those described in U.S. Pat. No. 5,449,754 for synthesizing peptide arrays, as well as WO 98/41531 and the references cited therein for synthesizing polynucleotides (specifically, DNA). Such in situ synthesis methods can be basically regarded as repeating at each spot the sequence of: (a) deprotecting any previously deposited monomer so that it can now link with a subsequently deposited protected monomer; and (b) depositing a droplet of another protected monomer for linking. Different monomers may be deposited at different regions on the substrate during any one iteration so that the different regions of the completed array will have different desired biopolymer sequences. One or more intermediate further steps may be required in each iteration, such as oxidation, capping and washing steps. The deposition methods basically involve depositing biopolymers at predetermined locations on a substrate, which are suitably activated such that the biopolymers can link thereto. Biopolymers of different sequence may be deposited at different regions of the substrate to yield the completed array. Washing or other additional steps may also be used. Reagents used in typical in situ synthesis are water sensitive, and thus the presence of moisture should be eliminated or at least minimized.

The *in situ* method for fabricating a polynucleotide array typically follows, at each of the multiple different addresses at which features are to be formed, the same conventional iterative sequence used in forming polynucleotides from nucleoside reagents on a substrate by means of known chemistry. This iterative sequence is as follows: (a) coupling a selected nucleoside through a phosphite linkage to a functionalized substrate in the first iteration, or a nucleoside bound to the substrate (i.e. the nucleoside-modified substrate) in subsequent iterations; (b) optionally, but preferably, blocking unreacted hydroxyl groups on the substrate bound nucleoside; (c) oxidizing the phosphite linkage of step (a) to form a phosphate linkage; and (d) removing the protecting group ("deprotection") from the now substrate bound nucleoside coupled in step (a), to generate a reactive site for the next cycle of these steps. The functionalized substrate (in the first cycle) or deprotected coupled nucleoside (in subsequent cycles) provides a substrate bound moiety with a linking group for forming the phosphite linkage with a next nucleoside to be coupled in step (a). A number of reagents involved in the above synthetic steps such as, for example, phosphoramidite reagents, are sensitive to moisture and anhydrous conditions and solvents are employed. Final deprotection of nucleoside bases can be accomplished using alkaline conditions such as ammonium hydroxide, in a known manner.

The foregoing chemistry of the synthesis of polynucleotides is described in detail, for example, in Caruthers, Science 230: 281-285, 1985; Itakura, *et al.,* Ann. Rev. Biochem. 53: 323-356; Hunkapillar, *et al.,* Nature 310: 105-110, 1984; and in "Synthesis of Oligonucleotide Derivatives in Design and Targeted Reaction of Oligonucleotide Derivatives", CRC Press, Boca Raton, Fla., pages 100 *et seq.,* U.S. Patent Nos. 4,458,066, 4,500,707, 5,153,319, and 5,869,643, EP 0294196, and elsewhere.

As mentioned above, various ways may be employed to produce an array of polynucleotides on the surface of a substrate such as a glass substrate. Such methods are known in the art. One *in situ* method employs pulse-jet technology to dispense the appropriate phosphoramidite reagents and other reagents onto individual sites on a surface of a substrate. Oligonucleotides are synthesized on a surface of a substrate in *situ* using phosphoramidite chemistry. Solutions containing nucleotide monomers and other reagents as necessary such as an activator, e.g., tetrazole, are applied to the surface of a substrate by means of thermal pulse-jet technology. Individual droplets of reagents are applied to reactive areas on the surface using, for example, a thermal pulse-jet type nozzle. The surface of the substrate may have an alkyl bromide trichlorosilane coating to which is attached polyethylene glycol to provide terminal hydroxyl groups. These hydroxyl groups provide for linking to a terminal primary amine group on a monomeric reagent. Excess of non-reacted chemical on the surface is washed away in a subsequent step. For example, see U.S. Patent No. 5,700,637 and PCT WO 95/25116 and PCT application WO 89/10977.

Another approach for fabricating an array of biopolymers on a substrate using a biopolymer or biomonomer fluid and using a fluid dispensing head is described in U.S. Patent No. 6,242,266 (Schleifer, *et al.*). The head has at least one jet that can dispense droplets onto a surface of a substrate. The jet includes a chamber with an orifice and an ejector, which, when activated, causes a droplet to be ejected from the orifice. Multiple droplets of the biopolymer or biomonomer fluid are dispensed from the head orifice so as to form an array of droplets on the surface of the substrate.

In another embodiment (U.S. Patent No. 6,232,072) (Fisher) a method of, and apparatus for, fabricating a biopolymer array is disclosed. Droplets of fluid carrying the biopolymer or biomonomer are deposited onto a front side of a transparent substrate. Light is directed through the substrate from the front side, back through a substrate backside and a first set of deposited droplets on the first side to an image sensor.

An example of another method for chemical array fabrication is described in U.S. Patent No. 6,180,351 (Cattell). The method includes receiving from a remote station information on a layout of the array and an associated first identifier. A local identifier is generated corresponding to the first identifier and associated array. The local identifier is shorter in length than the corresponding first identifier. The addressable array is fabricated on the substrate in accordance with the received layout information.

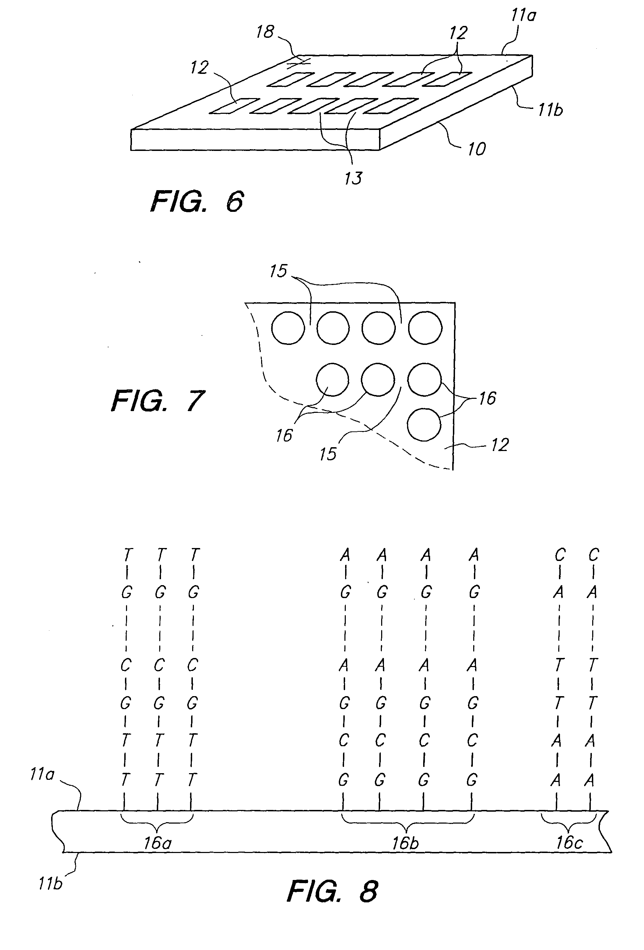

Referring to Figs. 6-8, there is shown multiple identical arrays 12 (only some of which are shown in Fig. 6), separated by inter-array regions 13, across the complete front surface 11a of a single transparent substrate 10. However, the arrays 12 on a given substrate need not be identical and some or all could be different. Each array 12 will contain multiple spots or features 16 separated by inter-feature regions 15. A typical array 12 may contain from 100 to 100,000 features. At least some, or all, of the features are of different compositions (for example, when any repeats of each feature composition are excluded the remaining features may account for at least 5%, 10%, or 20% of the total number of features). Each feature carries a predetermined moiety (such as a particular polynucleotide sequence), or a predetermined mixture of moieties (such as a mixture of particular polynucleotides). This is illustrated schematically in Fig. 8 where different regions 16 are shown as carrying different polynucleotide sequences.

Substrates comprising polynucleotide arrays may be provided in a number of different formats. In one format, the array is provided as part of a package in which the array itself is disposed on a first side of a glass or other transparent substrate. This substrate is fixed (such as by adhesive) to a housing with the array facing the interior of a chamber formed between the substrate and housing. An inlet and outlet may be provided to introduce and remove sample and wash liquids to and from the chamber during use of the array. The entire package may then be inserted into a laser scanner, and the sample-exposed array may be read through a second side of the substrate.

In another format, the array is present on an unmounted glass or other transparent slide substrate. This array is then exposed to a sample optionally using a temporary housing to form a chamber with the array substrate. The substrate may then be placed in a laser scanner to read the exposed array.

In another format the substrate is mounted on a substrate holder and retained thereon in a mounted position without the array contacting the holder. The holder is then inserted into an array reader and the array read. In one aspect of the above approach, the moieties may be on at least a portion of a rear surface of a transparent substrate, which is opposite a first portion on the front surface. In this format the substrate, when in the mounted position, has the exposed array facing a backer member of the holder without the array contacting the holder. The backer member is preferably has a very low in intrinsic fluorescence or is located far enough from the array to rcnder any such fluorescence insignificant. Optionally, the array may be read through the front side of the substrate. The reading, for example, may include directing a light beam through the substrate from the front side and onto the array on the rear side. A resulting signal is detected from the array, which has passed from the rear side through the substrate and out the substrate front side. The holder may further include front and rear clamp sets, which can be moved apart to receive the substrate between the sets. In this case, the substrate is retained in the mounted position by the clamp sets being urged (such as resiliently, for example by one or more springs) against portions of the front and rear surfaces, respectively. The clamp sets may, for example, be urged against the substrate front and rear surfaces of a mounted substrate at positions adjacent a periphery of that slide. Alternatively, the array may be read on the front side when the substrate is positioned in the holder with the array facing forward (that is, away from the holder).

Regardless of the specific format, the above substrates may be employed in various assays involving biopolymers. For example, following receipt by a user of an array made by an apparatus or method of the present invention, it will typically be exposed to a sample (for example, a fluorescent-labeled polynucleotide or protein containing sample) and the array is then read.

An oligonucleotide probe may be, or may be capable of being, labeled with a reporter group, which generates a signal, or may be, or may be capable of becoming, bound to a support. Detection of signal depends upon the nature of the label or reporter group. Commonly, binding of an oligonucleotide probe to a target polynucleotide sequence is detected by means of a label incorporated into the target. Alternatively, the target polynucleotide sequence may be unlabeled and a second oligonucleotide probe may be labeled. Binding can be detected by separating the bound second oligonucleotide probe or target polynucleotide from the free second oligonucleotide probe or target polynucleotide and detecting the label. In one approach, a sandwich is formed comprised of one oligonucleotide probe, which may be labeled, the target polynucleotide and an oligonucleotide probe that is or can become bound to a surface of a support. Alternatively, binding can be detected by a change in the signal-producing properties of the label upon binding, such as a change in the emission efficiency of a fluorescent or chemiluminescent label. This permits detection to be carried out without a separation step. Finally, binding can be detected by labeling the target polynucleotide, allowing the target polynucleotide to hybridize to a surface-bound oligonucleotide probe, washing away the unbound target polynucleotide and detecting the labeled target polynucleotide that remains. Direct detection of labeled target polynucleotide hybridized to surface-bound oligonucleotide probes is particularly advantageous in the use of ordered arrays.

In one approach, cell matter is lysed, to release its DNA as fragments, which are then separated out by electrophoresis or other means, and then tagged with a fluorescent or other label. The DNA mix is exposed to an array of oligonucleotide probes, whereupon selective attachment to matching probe sites takes place. The array is then washed and the result of exposure to the array is determined. In this particular example, the array is imaged by scanning the surface of the support so as to reveal for analysis and interpretation the sites where attachment occurred.

The signal referred to above may arise from any moiety that may be incorporated into a molecule such as an oligonucleotide probe for the purpose of detection. Often, a label is employed, which may be a member of a signal producing system. The label is capable of being detected directly or indirectly. In general, any reporter molecule that is detectable can be a label. Labels include, for example, (i) reporter molecules that can be detected directly by virtue of generating a signal, (ii) specific binding pair members that may be detected indirectly by subsequent binding to a cognate that contains a reporter molecule, (iii) mass tags detectable by mass spectrometry, (iv) oligonucleotide primers that can provide a template for amplification or ligation and (v) a specific polynucleotide sequence or recognition sequence that can act as a ligand such as for a repressor protein, wherein in the latter two instances the oligonucleotide primer or repressor protein will have, or be capable of having, a reporter molecule and so forth. The reporter molecule can be a catalyst, such as an enzyme, a polynucleotide coding for a catalyst, promoter, dye, fluorescent molecule, chemiluminescent molecule, coenzyme, enzyme substrate, radioactive group, a small organic molecule, amplifiable polynucleotide sequence, a particle such as latex or carbon particle, metal sol, crystallite, liposome, cell, etc., which may or may not be further labeled with a dye, catalyst or other detectable group, a mass tag that alters the weight of the molecule to which it is conjugated for mass spectrometry purposes, and the like.

The signal may be produced by a signal producing system, which is a system that generates a signal that relates to the presence or amount of a target polynucleotide in a medium. The signal producing system may have one or more components, at least one component being the label. The signal producing system includes all of the reagents required to produce a measurable signal. The signal producing system provides a signal detectable by external means, by use of electromagnetic radiation, desirably by visual examination. Signal-producing systems that may be employed in the present invention are those described more fully in U.S. Patent No. 5,508,178, the relevant disclosure of which is incorporated herein by reference.

The arrays and the liquid samples are maintained in contact for a period of time sufficient for the desired chemical reaction to occur. The conditions for a reaction, such as, for example, period of time of contact, temperature, pH, salt concentration and so forth, are dependent on the nature of the chemical reaction, the nature of the chemical reactants including the liquid samples, and the like. The conditions for binding of members of specific binding pairs are generally well known and will not be discussed in detail here. The conditions for the various processing steps are also known in the art.

The substrates comprising the arrays prepared as described above are particularly suitable for conducting hybridization reactions. Such reactions are carried out on a substrate or support comprising a plurality of features relating to the hybridization reactions. The substrate is exposed to liquid samples and to other reagents for carrying out the hybridization reactions. The support surface exposed to the sample is incubated under conditions suitable for hybridization reactions to occur.

After the appropriate period of time of contact between the liquid samples and the arrays on the surface of the substrate, the contact is discontinued and various processing steps are performed. Following the processing of the substrate, it is moved to an examining device where the surface of the substrate on which the arrays are disposed is interrogated. The examining device may be a scanning device involving an optical system.

Reading of the array may be accomplished by illuminating the array and reading the location and intensity of resulting fluorescence at each feature of the array. For example, a scanner may be used for this purpose where the scanner may be similar to, for example, the AGILENT MICROARRAY SCANNER available from Agilent Technologies Inc, Palo Alto, CA. Other suitable apparatus and methods are described in U.S. patent applications: Serial No. 09/846,125 "Reading Multi-Featured Arrays" by Dorsel, *et al.;* and U.S. Patent No. 6,406,849. The relevant portions of these references are incorporated herein by reference. However, arrays may be read by methods or apparatus other than the foregoing, with other reading methods including other optical techniques (for example, detecting chemiluminescent or electroluminescent labels) or electrical techniques (where each feature is provided with an electrode to detect hybridization at that feature in a manner disclosed in U.S. Patent Nos. 6,221,583 and 6,251,685, and elsewhere). Results from the reading may be raw results (such as fluorescence intensity readings for each feature in one or more color channels) or may be processed results such as obtained by rejecting a reading for a feature that is below a predetermined threshold and/or forming conclusions based on the pattern read from the array (such as whether or not a particular target sequence may have been present in the sample). The results of the reading (processed or not) may be forwarded (such as by communication) to a remote location if desired, and received there for further use (such as further processing).

When one item is indicated as being "remote" from another, this is referenced that the two items are at least in different buildings, and may be at least one mile, ten miles, or at least one hundred miles apart. "Communicating" information references transmitting the data representing that information as electrical signals over a suitable communication channel (for example, a private or public network). "Forwarding" an item refers to any means of getting that item from one location to the next, whether by physically transporting that item or otherwise (where that is possible) and includes, at least in the case of data, physically transporting a medium carrying the data or communicating the data.

All publications and patent applications cited in this specification are herein incorporated by reference as if each individual publication or patent application were specifically and individually indicated to be incorporated by reference.

Although the foregoing invention has been described in some detail by way of illustration and example for purposes of clarity of understanding, it will be readily apparent to those of ordinary skill in the art in light of the teachings of this invention that certain changes and modifications may be made thereto without departing from the scope of the appended claims. Furthermore, the foregoing description, for purposes of explanation, used specific nomenclature to provide a thorough understanding of the invention. However, it will be apparent to one skilled in the art that the specific details are not required in order to practice the invention. Thus, the foregoing descriptions of specific embodiments of the present invention are presented for purposes of illustration and description; they are not intended to be exhaustive or to limit the invention to the precise forms disclosed. Many modifications and variations are possible in view of the above teachings. The embodiments were chosen and described in order to explain the principles of the invention and its practical applications and to thereby enable others skilled in the art to utilize the invention.

## Claims

1. A method for dispensing, from a droplet dispensing device (104), droplets of fluid reagent for synthesizing a plurality of biopolymers on a substrate (10), said dispensing device comprising a surface (146) comprising a plurality of nozzles (160), said method comprising:
(a) introducing a source-sink flow of gas adjacent said surface and
(b) dispensing droplets of fluid from said droplet dispensing device to a surface ( 11a) of said substrate.

2. A method as claimed in Claim 1 wherein a source-sink flow is introduced adjacent opposing sides of said droplet dispensing device.

3. A method as claimed in Claim 1 or 2 wherein a plurality of droplet dispensing devices are employed and said method comprises introducing a source-sink flow of gas between each of said droplet dispensing devices adjacent each of said surfaces.

4. A method as claimed in any preceding claim wherein said gas is introduced through at least one inlet (134) and removed by means of vacuum sources (124) flanking said introduced gas.

5. A method as claimed in Claim 4 wherein said gas is introduced and removed by means of a manifold (108) adjacent said droplet dispensing device.

6. A method as claimed in Claim 5 wherein said manifold comprises at least one gas inlet (134) flanked by gas outlets (142, 144).

7. A method as claimed in any preceding claim wherein said droplet dispensing device comprises a plurality of nozzles (160) aligned in parallel rows.

8. Apparatus (100) for dispensing droplets of fluid, said apparatus comprising:
(a) means (104) for dispensing drops of fluid and
(b) means (108) for introducing a source-sink flow of gas adjacent said means for dispensing drops of fluid.

9. Apparatus (100) as claimed in Claim 8 wherein:
(a) said means (104) for dispensing drops of fluid comprises a droplet dispensing device comprising a surface (146) comprising a plurality of nozzles (160) and
(b) said means (108) for introducing a source sink flow of gas comprises a manifold comprising at least one gas inlet (134) flanked by gas outlets (142, 144) wherein said manifold is disposed adjacent said droplet dispensing device.

10. Apparatus as claimed in Claim 9 wherein said manifold (108) comprises a row of gas inlets (134) with a row of gas outlets (142, 144) disposed on either side of said row of gas inlets.

11. Apparatus as claimed in Claim 9 or 10 wherein said gas inlet is in fluid communication with a source of pressurized gas (130) and wherein said gas outlets are in fluid communication with a vacuum source (124).

12. Apparatus as claimed in any of claims 9 to 11 further comprising a sensor (172) for sensing the condition of said gas from said gas inlet.

13. Apparatus (400) for synthesizing a plurality of biopolymer features on the surface (11a) of a substrate (10), said apparatus comprising:
(a) a reaction chamber (404) and
(b) apparatus (100) as claimed in any of claims 8 to 12 wherein said means (104) for dispensing is a device for dispensing reagents for synthesizing biopolymers to a surface of a substrate.

14. A method for synthesizing an array (12) of biopolymers on a surface (11a) of a substrate (10), said method comprising, in multiple rounds of subunit additions, adding one or more polymer subunits at each of multiple feature locations on said surface to form one or more arrays on said surface, each round of subunit additions comprising:
(a) bringing said substrate and an apparatus as claimed in Claim 13 into a dispensing position relative to said activated discrete sites on said surface wherein said reagents are polymer subunits for the synthesis of said biopolymers and wherein said gas inlet is in fluid communication with a source of pressurized gas and said gas outlets are in fluid communication with a vacuum source,
(b) activating said source of pressurized gas and said vacuum source,
(c) dispensing said polymer subunits to said discrete sites,
(d) removing said substrate and/or said dispensing system from said relative dispensing position, and
(e) repeating steps (a) - (d).

15. A method as claimed in Claim 14 wherein said biopolymers are polynucleotides or polypeptides.

16. A method as claimed in Claim 14 or 15 further comprising monitoring at least one characteristic or condition of said introduced gas.
